# FASCICULE DE BREVET EUROPEEN

(11) **EP 0 485 268 B1**
(45) Date de publication et mention de la délivrance du brevet: **08.03.1995**
(21) Numéro de dépôt: 91402942.6
(22) Date de dépôt: 04.11.1991
(51) Int. Cl.: H04N 9/31, H04N 5/74

(54) **Projecteur d'images à deux faisceaux polarisés par écran matriciel**
Matrix-Bildprojektor mit zwei polarisierten Strahlen
Matrix screen image projector with two polarized beams

(30) Priorité: 09.11.1990 FR 9013942
(43) Date de publication de la demande: 13.05.1992
(73) Titulaire: THOMSON-CSF, 75008 Paris (FR)
(72) Inventeur: Nicolas, Christophe, F-92045 Paris la Défense (FR); Huignard, Jean-Pierre, F-92045 Paris la Défense (FR)
(74) Mandataire: Guérin, Michel

(56) Documents cités:
- EP-A- 0 258 927
- EP-A- 0 376 395
- DE-A- 3 829 598
- PATENT ABSTRACTS OF JAPAN, vol. 10, no. 268 (E-436)[2324], 12 septembre 1986;& JP-A-61 090 584
- PATENT ABSTRACTS OF JAPAN, vol. 12, no. 461 (E-689)[3308], 5 décembre 1988;& JP-A-63 182 987
- PATENT ABSTRACTS OF JAPAN, vol. 10, no. 308 (P-508)[2364], 21 octobre 1986;& JP-A-61 122 626

## Description

L'invention se rapporte aux projecteurs d'images dans lesquels une modulation spatiale de la lumière est effectuée à l'aide d'un écran à cristaux liquides.

Elle se rapporte plus particulièrement aux projecteurs d'images utilisant les deux directions de polarisation orthogonales et complémentaires de la lumière.

Dans les projecteurs d'images, l'image projetée sur un écran résulte d'une modulation spatiale de la lumière. La lumière produite par une source est guidée jusqu'à un ensemble de modulation de lumière regroupant les moyens nécessaires à réaliser la modulation spatiale de la lumière. Il est courant d'utiliser en tant que modulateur spatial de lumière, un écran à cristaux liquides (en abrégé "écran matriciel LCD", de l'anglais "Liquid Crystal Display") comprenant un réseau matriciel de cellules élémentaires à cristaux liquides, commandées à partir d'un signal vidéo ; chaque cellule représentant un point élémentaire d'image.

La manière la plus simple de former une image à l'aide d'un écran matriciel LCD, consiste à éclairer celui-ci par une lumière polarisée linéairement. A cet effet, il est courant d'une part, d'interposer un polariseur entre la source de lumière et l'écran matriciel LCD, afin de sélectionner une direction particulière de polarisation pour l'éclairage de l'écran matriciel LCD ; puis d'autre part de placer à la suite de l'écran matriciel LCD un second polariseur (appelé alors "analyseur de polarisation" ) qui transforme en modulation d'intensité, la modulation angulaire de polarisation produite par l'écran matriciel LCD. L'inconvénient majeur de cette méthode est que par la sélection d'une direction particulière de polarisation, pour l'éclairage de l'écran matriciel LCD, on perd plus de la moitié de l'énergie lumineuse.

Pour améliorer l'efficacité d'éclairage de l'écran matriciel LCD, il est connu de séparer spatialement la lumière en deux faisceaux polarisés ayant des directions de polarisations complémentaires, en vue d'utiliser toute la lumière produite par la source. A cet effet plusieurs méthodes peuvent être employées :
a - suivant une première méthode (voir demande de brevet européen n° EP-A- 0. 372. 905), chaque faisceau polarisé éclaire un écran matriciel LCD différent ; et les images formées séparément par les deux écrans matriciels LCD sont superposées. L'inconvénient important de cette méthode et qu'elle requiert l'utilisation de deux écrans LCD, ce qui conduit à un coût très élevé du projecteur d'image ;
b - une autre méthode consiste à faire tourner de 90° la direction de polarisation de l'un des deux faisceaux polarisés, pour que dans les deux faisceaux polarisés la direction de polarisation soit la même ; puis de diriger ensuite les deux faisceaux de manière à éclairer l'écran matriciel LCD. Une telle structure est montrée et décrite dans le compte-rendu de conférence "EURODISPLAY", page 90, organisé en 1990 par S.I.D. à Amsterdam.

La structure décrite dans le document ci-dessus mentionné présente au moins un inconvénient important, qui réside dans le fait qu'elle conduit, soit à un encombrement relativement important du projecteur, ( distance entre l'élément séparateur de polarisation et l'écran matriciel LCD) afin d'éviter que les deux faisceaux se propageant vers l'écran matriciel LCD en formant entre eux un angle relativement important ; soit à l'obligation d'utiliser un objectif de projection à grande ouverture. Un autre inconvénient de cette structure est qu'elle ne permet pas de conférer des chemins optiques symétriques aux deux faisceaux polarisés, de sorte qu'il est difficile de parfaitement superposer sur le même écran matriciel LCD, les tâches d'éclairage formées par ces deux faisceaux, c'est-à-dire de superposer les sections de ces deux faisceaux.

La présente invention se rapporte à un projecteur d'images du type dans lequel l'éclairage de l'écran matriciel LCD est réalisé par deux faisceaux polarisés, après rotation de 90° de la direction de polarisation de l'un de ces deux faisceaux.

L'invention propose un agencement nouveau d'un tel ensemble de modulation, agencement qui permet notamment de conférer un faible encombrement à l'ensemble de modulation, tout en permettant l'utilisation d'un objectif de projection ayant une faible ouverture.

L'invention s'applique aussi bien aux projecteurs d'images de type dit "frontal" (réflexion diffusante de la lumière projetée sur l'écran de projection), que de type dit "par l'arrière" (transmission diffusante de la lumière projetée sur l'écran de projection). L'invention s'applique en outre aussi bien à réaliser des images monochromes que des images couleurs.

Suivant l'invention, un projecteur d'images comportant au moins un écran matriciel à cristaux liquides, au moins un élément rotateur de direction de polarisation, au moins un séparateur de polarisation séparant la lumière en deux faisceaux polarisés ayant l'un par rapport à l'autre des directions de polarisation orthogonales, les deux faisceaux polarisés étant destinés à être modulés par l'écran matriciel après que l'un de ces faisceaux ait traversé l'élément rotateur, est caractérisé en ce qu'il comporte, d'une part des premiers moyens pour réaliser au moins deux réflexions pour chaque faisceau polarisé, une première réflexion réfléchissant le faisceau en direction d'un axe optique sur lequel est centré l'écran matriciel, et une seconde réflexion le réfléchissant ensuite en direction de l'écran matriciel, et en ce qu'il comporte d'autre part des seconds moyens pour rendre convergent chaque faisceau polarisé sur au moins une partie de son trajet compris entre le séparateur de polarisation et l'écran matriciel, de manière que chaque faisceau polarisé forme une image de la source de lumière entre la première réflexion et l'écran matriciel.

Cette disposition permet notamment d'orienter les deux faisceaux polarisés en direction de l'écran matriciel, par des miroirs situés très près de l'axe optique principal, de telle sorte que les deux faisceaux polarisés forment entre eux un angle faible, et que chaque faisceau polarisé forme une image de la source de lumière à proximité de l'axe optique.

Cette disposition offre en outre l'avantage de permettre une parfaite symétrie dans les trajets des deux faisceaux polarisés.

L'invention sera mieux comprise à la lecture de la description qui suit de certains de ses modes de réalisation, description faite en référence aux figures annexées parmi lesquelles :
- la figure 1 montre de façon schématique, un projecteur suivant l'invention, permettant de projeter des images monochromes ;
- la figure 2 montre schématiquement un projecteur conforme à l'invention, permettant de projeter des images couleurs ;
- la figure 3 montre un projecteur d'images couleurs utilisant un unique ensemble séparateur ;
- la figure 4 montre schématiquement une seconde version d'un projecteur d'images couleurs du type montré à la figure 3 ;
- la figure 5 montre schématiquement un projecteur d'images couleurs du type montré à la figure 3, mais utilisant des miroirs séparés sélectifs en longueur d'onde.

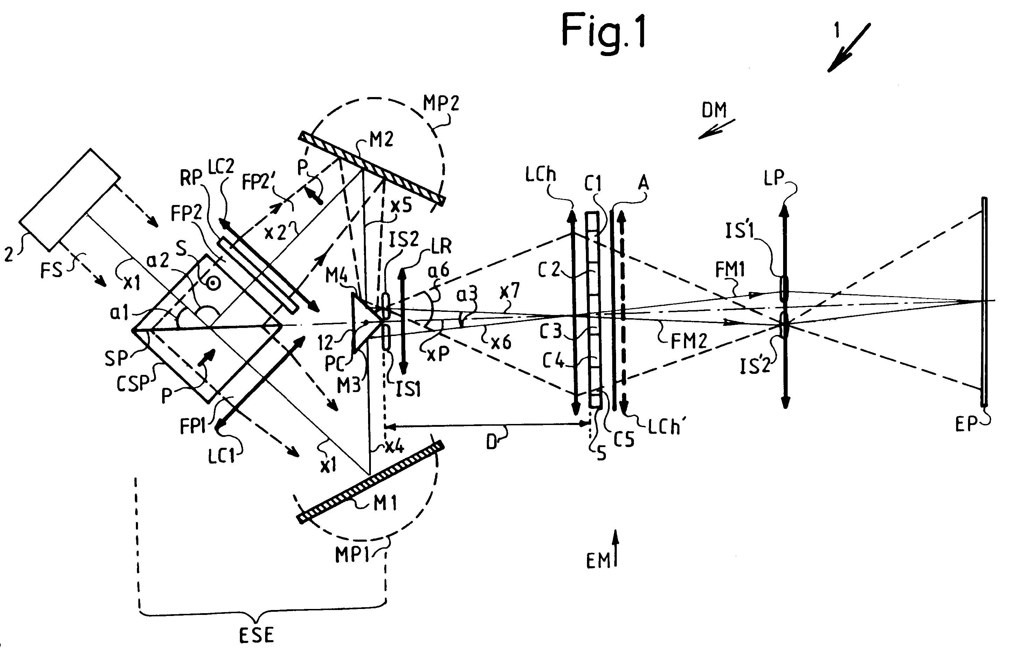

La figure 1 montre le schéma d'un projecteur d'images 1 conforme à l'invention, de type monochrome.

Le projecteur 1 comporte une source de lumière 2 produisant un faisceau FS de lumière dit faisceau source, dont la lumière ne comporte pas de direction particulière de polarisation. De façon classique les rayons du faisceau source sont pratiquement parallèles. A cet effet par exemple, la source de lumière peut être constituée par une lampe d'éclairage (non représentée) placée au foyer d'un réflecteur parabolique (non représenté), ou bien encore au foyer d'une lentille convergente.

Le faisceau source FS se propage suivant un axe de propagation x1, en direction d'un séparateur de polarisation SP. Le séparateur de polarisation SP peut être d'un type classique ; il peut être constitué par exemple par une surface séparatrice de polarisation SP formée par un empilement de films en couches minces de matériaux diélectriques, de manière à faire alterner différents indices de réfraction suivant une technique conventionnelle. On trouve couramment dans le commerce de telles surfaces séparatrices de polarisation réalisées dans des cubes appelés "cubes séparateurs de polarisation".

Dans l'exemple non limitatif décrit, la surface séparatrice SP est située sur l'axe de propagation x1 et forme avec ce dernier un angle a1 de 45°. La surface séparatrice SP décompose le faisceau source FS en deux faisceaux polarisés FP1, FP2 d'intensité pratiquement égale, mais dont les directions de polarisation sont perpendiculaires.

Le premier faisceau polarisé FP1 est un faisceau transmis qui, ayant traversé la surface séparatrice SP, se propage suivant le premier axe de propagation x1 en direction d'un miroir M1. La lumière qui constitue le premier faisceau polarisé FP1 a une direction de polarisation P parallèle au plan d'incidence sur SP (le plan d'incidence étant le plan qui contient le rayon incident moyen de FS c'est-à-dire l'axe x1, et la normale à la surface séparatrice SP).

Le second faisceau polarisé FP2 est un faisceau réfléchi par la surface séparatrice SP suivant un second axe de propagation x2, en direction également d'un miroir M2. Le second axe x2 de propagation forme un angle a2 de sensiblement 90° avec la première direction de propagation x1. Le second faisceau polarisé FP2 a une direction de polarisation S perpendiculaire au plan d'incidence, c'est-à-dire qu'elle est orthogonale à celle du premier faisceau polarisé FP1.

Les deux faisceaux polarisés FP1, FP2 sont destinés à éclairer un écran matriciel 5 LCD, comportant de façon classique une pluralité de cellules à cristaux liquides du type "nématique en hélice à 90°", disposées en lignes et en colonnes. Pour simplifier la figure, seulement cinq cellules C1 à C5 à cristaux liquides sont représentées formant une colonne, chaque cellule C1 à C5 symbolise une ligne de cellules qui s'étend perpendiculairement au plan de la figure.

Les deux faisceaux polarisés FP1, FP2 doivent être modulés par le même écran matriciel 5. A cette fin, un élément rotateur de polarisation RP est interposé sur le trajet de l'un ou l'autre de ces deux faisceaux polarisés, afin de faire tourner de 90° la polarisation de la lumière formant le faisceau choisi. Dans l'exemple non limitatif décrit, l'élément rotateur RP est disposé sur le trajet du second faisceau polarisé FP2, sur le second axe de propagation x2 et entre la surface séparatrice SP et le miroir M2, afin de faire tourner de 90° la direction de polarisation de ce faisceau, et l'amener du type S au type P. Par suite, le second faisceau polarisé émerge de l'élément rotateur RP suivant un faisceau repéré FP2′ dont la direction de polarisation est du type P, c'est-à-dire identique à celle du premier faisceau polarisé FP1.

On obtient donc deux faisceaux polarisés FP1, et FP2′ se propageant suivant deux directions perpendiculaires entre elles et ayant des directions de polarisation P identiques. (Pour simplifier la figure 1, on a représenté que partiellement les limites du premier faisceau polarisé FP1).

Suivant une caractéristique de l'invention, les deux faisceaux polarisés FP1, FP2′ sont réfléchis chacun une première fois, par les premiers miroirs M1, M2, en direction d'un axe optique principal xP sur lequel est centré l'écran matriciel 5, puis ils sont réfléchis chacun une seconde fois, à l'aide de seconds miroirs M3, M4, en direction de l'écran matriciel 5.

Suivant une autre caractéristique de l'invention, les deux faisceaux FP1, FP2′ sont rendus convergents, de manière à ce qu'ils puissent chacun former une image IS1, IS2 (symbolisées sur la figure par un ovale) de la source, de préférence à proximité de l'axe optique principal xP ; d'où il résulte que ces deux faisceaux FP1, FP2 peuvent être renvoyés vers l'écran matriciel 5 en formant entre eux un angle a3 relativement faible.

Suivant une autre caractéristique de l'invention, la surface séparatrice de polarisation SP est située dans un plan perpendiculaire à celui de l'écran matriciel 5. En outre, le plan de la surface séparatrice SP contient l'axe optique principal xP et constitue un plan de symétrie de l'ensemble formé par l'écran matriciel 5, les miroirs M1, M2, M3, M4 et les moyens de convergence des faisceaux. La disposition relative de ces éléments pourrait être différente, mais cette disposition permet de conférer aux trajets des deux faisceaux polarisés FP1, FP2, une parfaite symétrie, par rapport à l'axe optique principal, ce qui facilite une parfaite superposition sur l'écran matriciel 5, des deux faisceaux polarisés FP1, FP2′.

Dans l'exemple non limitatif décrit, les deux faisceaux polarisés FP1, FP2′ sont dirigés par les premiers miroirs M1, M2 vers un même point de convergence PC situé sur l'axe optique principal xP. L'orientation des premiers miroirs M1, M2 est telle, que les deux faisceaux FP1, FP2′ se propagent suivant des axes x4, x5 confondus et qui sont perpendiculaires à l'axe optique principal xP.

Après réflexion par les seconds miroirs M3, M4, le premier et le second faisceaux polarisés FP1, FP2′ se propagent en direction de l'écran matriciel 5, suivant respectivement un axe x6 et un axe x7. Ces deux axes de propagation x6, x7 convergent l'un vers l'autre afin de se croiser dans le plan de l'écran matriciel 5 ou à proximité de ce plan.

Dans l'exemple non limitatif représenté à la figure 1, la convergence des deux faisceaux polarisés FP1, FP2′ est réalisée à l'aide d'une première et d'une seconde lentilles convergentes LC1, LC2, disposées respectivement sur le trajet du premier et du second faisceaux polarisés FP1, FP2′, à proximité de la surface séparatrice de polarisation SP.

Les lentilles convergentes LC1, LC2 sont prévues par exemple pour focaliser les deux faisceaux FP1,, FP2′ au point de convergence PC, et la réflexion de ces deux faisceaux sur les seconds miroirs M3, M4 conduit à former les images de source IS1, IS2 sur les axes de propagation x6, x7, à des positions cependant très proches de l'axe optique principal xP. Bien entendu il est possible aussi que ces deux faisceaux FP1, FP2′ convergent en deux points différents (non représentés), à condition que ces deux points de convergence soient symétriques l'un par rapport à l'autre (c'est-à-dire symétriques par rapport au plan de la surface séparatrice SP.

Il est à noter que l'orientation des premiers miroirs M1, M2 pourrait aussi être différente, de manière que le point de convergence PC soit situé plus près ou plus loin de l'écran matriciel 5, l'important étant qu'en fonction de l'ouverture angulaire présentée par les deux faisceaux polarisés (telle que l'ouverture angulaire a6 montrée pour le faisceau FP2′), la distance D rapportée sur l'axe optique principal xP, entre l'écran matriciel 5 et les points images IS1, IS2, soit appropriée à ce que ces faisceaux éclairent pleinement sans déborder, la surface de l'écran matriciel 5, afin que toute l'énergie limineuse passe par ce dernier.

Dans l'exemple non limitatif décrit, une lentille de champ LCh est disposée sur l'axe optique principal xP à proximité de l'écran matriciel 5, entre ce dernier et les seconds miroirs M3, M4. Plus précisément la lentille de champ LCh est située sensiblement au point de croisement des deux axes de propagation x6, x7. La lentille de champ LCh a pour fonction de former des images IS′1 et IS′2 de la source, dans le plan de la pupille d'entrée d'un objectif ou système de projection LP, ( représenté schématiquement sur la figure par une lentille) situé sur l'axe optique principal xP, à l'opposé de la lentille de champ LCh par rapport à l'écran matriciel 5. Le grandissement de cette conjugaison optique est tel que IS′1 et IS′2 s'inscrivent entièrement dans l'ouverture de l'objectif de projection LP. Ainsi, toute l'énergie issue de la source 2 et limitée par les condenseurs ou lentilles convergentes LC1 et LC2, traverse sans perte les lentilles LCh et LP. Il est à noter que si nécessaire, une lentille dite "lentille relais" LR. peut être placée dans le plan contenant les deux premières images IS1, IS2 de source, ou dans un plan très voisin, de manière à former une image des lentilles convergentes LC1 et LC2 dans le plan de la lentille de champ LCH ; la lentille relais LR étant prévue pour permettre à toute l'énergie lumineuse issue des lentilles convergentes LC1, LC2 de traverser la lentille de champ LCh.

Les cellules C1 à C5 à cristaux liquides de l'écran matriciel 5 sont commandées de façon en elle-même classique (non représentée), par exemple par un signal vidéo. Cette commande des cellules C1 à C5 résulte en une modulation angulaire de la direction de polarisation des rayons lumineux qui traversent ces cellules, c'est-à-dire sur les rayons qui constituent les deux faisceaux polarisés FP1, FP2′. Cette modulation angulaire est transformée en modulation d'intensité d'une façon en elle-même classique, à l'aide d'un analyseur de polarisation A, lequel analyseur a pour fonction de sélectionner une direction particulière de polarisation (l'analyseur fonctionne dans ce cas comme un polariseur ).

Ainsi, si on observe l'écran matriciel 5 à travers l'analyseur A, on voit l'image vidéo, image qui peut être projetée sur un écran de projection EP, à l'aide de l'objectif de projection LP.

Dans l'exemple montré à la figure 1, l'écran matriciel 5 est éclairé par des rayons convergents, mais il pourrait aussi être éclairé par des rayons lumineux parallèles ou de faible inclinaison, par exemple en choisissant la lentille de champ LCh telle que les images IS1 et IS2 soient dans son plan focal objet. On peut dans ce cas placer une seconde lentille de champ LCh′ (montrée en traits pointillés) à la suite de l'écran matriciel 5 ou à la suite de l'analyseur A, de manière à former les images IS′1 et IS′2 dans le plan de l'objectif de projection LP.

Dans l'exemple montré à la figure 1, l'élément rotateur de polarisation RP est placé sur le trajet de second faisceau polarisé FP2, afin de conférer une même direction de polarisation aux deux faisceaux polarisés. Bien entendu, ceci peut être obtenu également en faisant tourner la direction de polarisation du premier faisceau polarisé FP1. Dans ce cas : il n'y a pas d'élément rotateur de polarisation sur le trajet du second faisceau FP2 qui conserve la direction de polarisation de type S (représentée perpendiculaire au plan de la figure) ; par contre un élément rotateur doit alors être interposé sur le trajet du premier faisceau polarisé FP1 pour faire tourner de 90° sa direction de polarisation, et l'amener du type P au type S.

Il est à noter que la rotation de direction de polarisation de 90° peut être accomplie, de façon classique, à l'aide d'un rotateur du type formé par une lame cristalline, dite "lame demi-onde". Cependant une telle lame a le désavantage d'être chromatique, c'est-à-dire qu'elle ne fonctionne correctement que pour une longueur d'onde, et pour une bande passante spectrale relativement étroite autour de cette longueur d'onde. Suivant une caractéristique de l'invention, l'élément rotateur de polarisation RP est constitué par une cellule à cristaux liquides, de type "nématique en hélice à 90°" fonctionnant suivant un mode dit guide d'onde ; une telle cellule remplit la fonction recherchée tout en étant moins coûteuse et moins chromatique. Bien entendu, une telle cellule doit être convenablement orientée par rapport aux directions de propagation et de polarisation de l'un ou l'autre des deux faisceaux polarisés FP1, FP2.

Il est à noter que la surface séparatrice de polarisation SP peut être réalisée de façon traditionnelle dans un cube séparateur CSP, et dans ce cas il est avantageux de disposer l'élément rotateur RP contre une face du cube séparateur CSP.

Il est à noter en outre que la convergence de chaque faisceau polarisé FP1, FP2′ peut être obtenu autrement qu'à l'aide des lentilles convergentes LC1, LC2. Par exemple, on peut utiliser un miroir parabolique MP1, MP2 (symbolisé en traits pointillés sur la figure 1) à la place de chacun des premiers miroirs M1, M2 ; dans ce cas les lentilles convergentes LC1, LC2 peuvent être supprimées.

On peut remarquer enfin que les seconds miroirs M3, M4 servant à orienter les deux faisceaux polarisés vers l'écran matriciel 5, peuvent avantageusement être formés sur les deux faces d'un prisme 12 ; ce qui permet notamment de leur conférer un encombrement réduit, et permet facilement de les disposer et les orienter de façon symétrique.

L'exemple de la figure 1 s'applique à un projecteur monochrome, fonctionnant par exemple avec une lumière blanche ou monochromatique. Mais les avantages apportés par l'invention sont encore amplifiés dans le cas d'un projecteur d'images couleur, où il est nécessaire de multiplier plusieurs des fonctions assurées dans un projecteur monochrome.

Ainsi plusieurs fonctions principales peuvent être soulignées dans le projecteur 1 de la figure 1, parmi lesquelles certaines doivent reproduites plusieurs fois dans un projecteur couleur :
- Parmi ces fonctions principales, il y a la séparation des polarisations P, S orthogonales suivant deux faisceaux polarisés FP1, FP2 ou FP2′, dont on assure ensuite la convergence, de manière qu'après au moins deux réflexions de chacun de ces faisceaux, ils soient orientés vers l'écran matriciel 5 en formant chacun une image IS1, IS2 de la source à proximité de l'axe optique principal xP. Pour faciliter la suite de la description, d'une part les éléments qui assurent ces fonctions sont regroupés dans un ensemble appelé "ensemble séparateur-orienteur" ESE ; et d'autre part les premier et second faisceaux polarisés FP1, FP2′, après leur réflexion respectivement par les seconds miroirs M3, M4 pour les orienter en direction de l'écran matriciel 5, constituent un groupe de deux faisceaux polarisés GP.

Une autre fonction importante à distinguer est la fonction de modulation remplie par l'écran matriciel 5 : l'écran matriciel 5 et la lentille de champ LCh (et éventuellement si elle est installée, la lentille de champ LCh′) sont groupés dans un autre ensemble appelé "ensemble de modulation" EM. En ce qui concerne les premier et second faisceaux polarisés FP1, FP2′ qui traversent l'écran matriciel 5, ils émergent de ce dernier en constituant respectivement un premier et un second faisceaux modulés FM1, FM2 représentés par les axes suivant lesquels ils se propagent (en effet, pour plus de clarté de la figure 1, seules les limites du second faisceau modulé FM2 sont représentées). Ces deux faisceaux modulés FM1, FM2 sont destinés à former une même image, et dans la suite de la description ils sont appelés "groupe de faisceaux modulés GM".

Enfin un ensemble séparateur-orienteur ESE suivi d'un ensemble modulateur EM comme montré à la figure 1, est appelé "dispositif monochrome " DM.

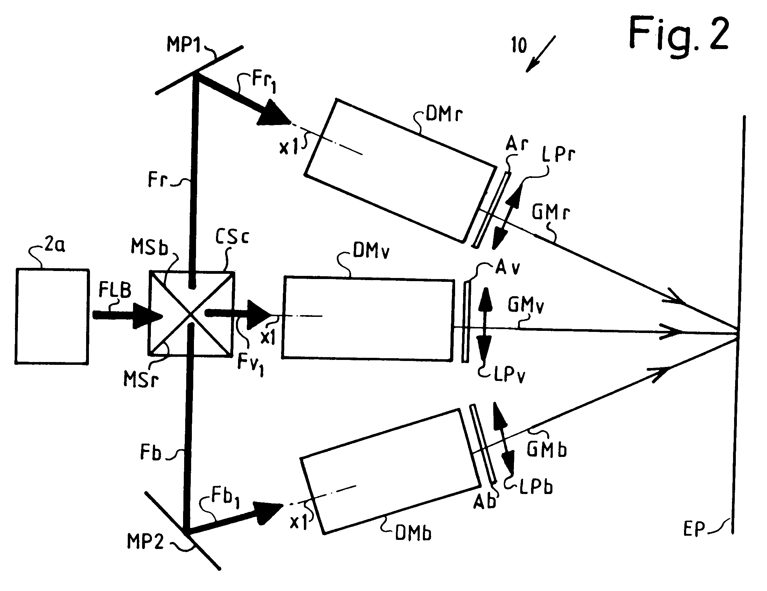

La figure 2 montre de façon schématique une application de l'invention à un projecteur 10 d'images couleur, dans lequel la couleur résulte de la combinaison de plusieurs couleurs primaires, telles que par exemple rouge, vert et bleu.

Le projecteur 10 comporte un premier, un second et un troisième dispositifs monochromes DMᵣ, DMᵥ, DM_{b} affectés respectivement à traiter une lumière de couleur rouge, verte et bleue. Chaque dispositif monochrome est semblable à celui montré à la figure 1, et comprend un axe de propagation x1 sur lequel se propage un faisceau de lumière monochrome non polarisée, Fᵣ₁, Fᵥ₁, F_{b1}, dont le spectre correspond à la couleur du dispositif monochrome correspondant. Chacun de ces faisceaux monochromes non polarisés peut être produit à partir d'une source de lumière particulière, ou comme montré sur la figure 2, à partir d'une unique source de lumière blanche 2a. Dans ce dernier cas, le faisceau de lumière blanche FLB est séparé en trois faisceaux monochromes Fᵣ₁, Fᵥ₁, F_{b1} de couleurs différentes, à l'aide d'éléments sélectifs en longueur d'ondes tels que notamment des filtres dichroïques ; par exemple à l'aide d'un cube dichroïque CSC classique, dans lequel par exemple : un miroir sélectif en longueur d'onde MSᵣ réfléchit une composante rouge formant le faisceau monochrome Fᵣ₁, lequel se propage en direction du dispositif monochrome DMᵣ après réflexion par un miroir plan MP₁ ; un autre miroir sélectif MS_{b} réfléchit une composante bleue formant le faisceau monochrome F_{b1}, lequel se propage en direction du dispositif monochrome DM_{b} après réflexion par un miroir plan MP₂ ; la composante verte formant le faisceau Fᵥ₁ étant transmise, directement en direction du dispositif monochrome DMᵥ.

Chaque dispositif monochrome est suivi d'un analyseur Aᵣ, Aᵥ, A_{b} et d'un objectif de projection LPᵣ, LPᵥ, LP_{b}, de manière que les trois images de couleurs différentes, contenues dans les groupes GMᵣ, GM_{b} et GMᵥ de faisceaux modulés soient superposées sur l'écran de projection EP.

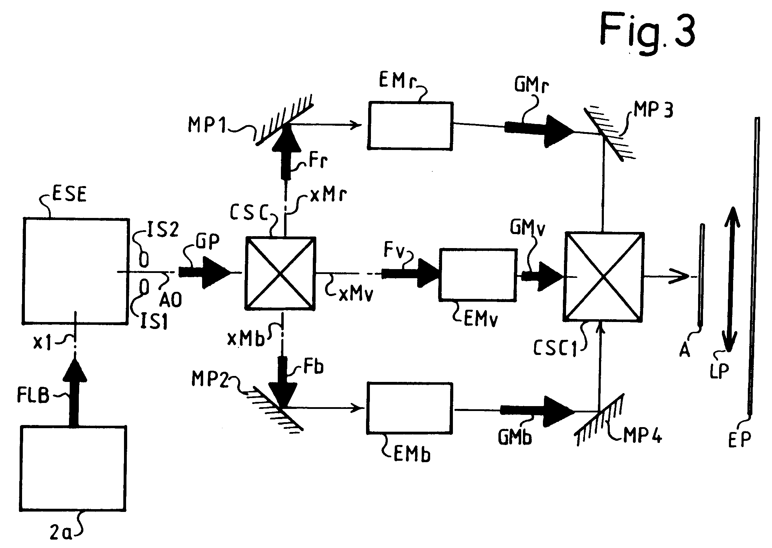

La figure 3 montre schématiquement un projecteur couleur 15 qui permet d'utiliser un unique ensemble séparateur-orienteur ESE, pour plusieurs ensembles de modulations affectés à traiter des couleurs différentes.

La source de lumière 2a produit un faisceau de lumière blanche FLB, non polarisée. Le faisceau de lumière blanche FLB est appliqué à un ensemble séparateur-orienteur ESE semblable à celui de la figure 1, d'une même manière qu'est appliqué le faisceau source FS (sur la figure 1).

L'ensemble séparateur-orienteur ESE délivre un groupe de deux faisceaux polarisés GP formé par un premier et un second faisceaux polarisés (non représentés sur la figure 3) ayant des directions de polarisation P identiques, comme dans le cas des deux faisceaux polarisés FP1, FP2′ ; ces deux faisceaux ayant formés chacun une image IS1, IS2, de part et d'autre d'un axe optique AO, lequel axe optique AO correspond à l'axe optique principal xP montré sur la figure 1.

Les images de source IS1, IS2 étant formées en lumière blanche, on sépare ensuite les trois couleurs primaires r, b, v pour éclairer avec chacune un écran matriciel (non représenté sur la figure 3) tel que l'écran matriciel 5 montré à la figure 1 ; chacun de ces écrans matriciels est disposé dans un premier, second et troisième ensembles modulateurs EMᵣ, EM_{b} et EMᵥ affectés respectivement au rouge, au bleu et au vert. A cet effet, le groupe GP de deux faisceaux polarisés passe par un dispositif séparateur de couleurs en lui-même classique, tel qu'un cube dichroïque CSC semblable à celui déjà montré à la figure 2. Ce dernier d'une part réfléchit les composantes rouge, et bleue respectivement suivant un premier et second axes optiques monochromes xMᵣ, xM_{b} en direction du premier et du second ensemble de modulation EMᵣ, EM_{b}, par l'intermédiaire d'un premier et d'un second miroirs plans MP1, MP2 ; et d'autre part il transmet la composante verte vers le troisième ensemble modulateur EMᵥ, suivant un troisième axe optique monochrome xMᵥ. Bien entendu ces composantes rouge, bleue et verte étant constituées à partir d'un groupe GP de deux faisceaux polarisés tels que FP1, FP2′, elles sont chacune sous la forme de deux faisceaux polarisés (non représentés) ayant une même direction de polarisation, et qui sont chacun des faisceaux divergents et dont les axes se croisent sensiblement dans le plan de l'écran matriciel, comme c'est le cas des deux faisceaux polarisés FP1, FP2′ (montrés figure 1) dans leur trajet entre les seconds miroirs M3, M4 et l'écran matriciel 5.

Chaque ensemble modulateur EM délivre un groupe de faisceaux modulés GMᵣ, GM_{b}, GMᵥ en direction d'un dispositif apte à les recombiner, par l'intermédiaire d'un miroir plan MP3, MP4, pour les groupes GMᵣ et GM_{b}.

Les trois groupes de faisceaux modulés GMᵣ, GM_{b} et GMᵥ, de couleurs primaires différentes, peuvent être superposés ou recombinés par un système dichroïque CSC1, dit de réunion (semblable par exemple au cube CSC de séparation de couleur) afin d'être projetés sur l'écran de projection EP par un objectif de projection LP unique. Mais, comme dans le cas de la figure 2, les trois images formées par les trois ensembles de modulation, peuvent aussi être projetées sur l'écran de projection EP par trois objectifs de projection séparés.

Il est à noter que les lentilles de champ LCh, LCh′ (non représentées à la figure 3) mentionnées en référence à la figure 1, peuvent être placées soit avant, soit après la séparation ou la superposition de couleur opérées respectivement par le cube CSC et le système dichroïque CSC1. Il peut ainsi n'y avoir qu'un seul système commun de lentilles de champ.

De même, il peut y avoir un analyseur Aᵣ, A_{b}, Aᵥ par voie, c'est-à-dire par dispositif de modulation, comme dans l'exemple de la figure 2. Mais aussi il peut y avoir un unique analyseur A commun aux trois couleurs, disposé après la superposition des trois couleurs.

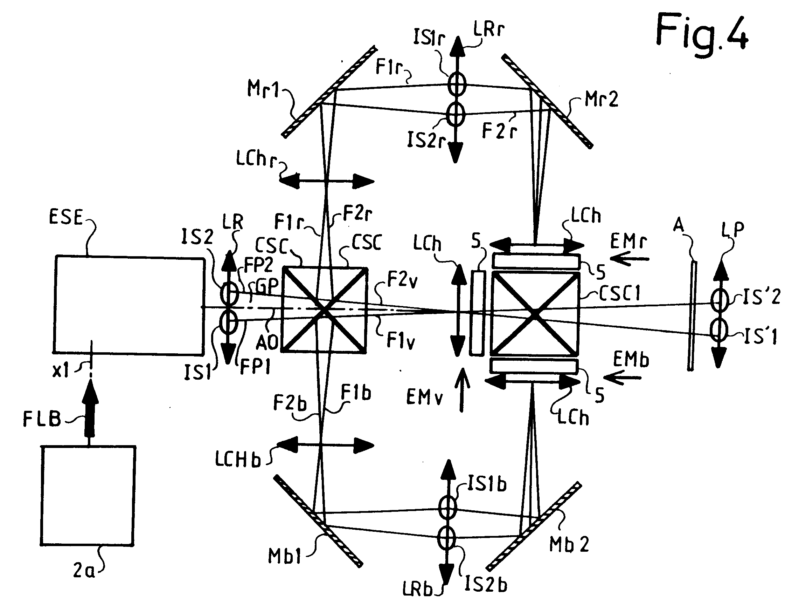

La figure 4 montre schématiquement comment utiliser l'invention dans un projecteur couleur 20 à trois couleurs primaires par exemple, dans lequel on utilise trois dispositifs modulateurs, c'est-à-dire trois écrans matriciels LCD tels que l'écran matriciel 5, avec un agencement qui permet d'utiliser un objectif de projection commun aux trois couleurs dans les meilleures conditions (tirage de l'objectif), avec trois étendues géométriques de faisceaux identiques.

Comme dans l'exemple de la figure 3, un faisceau de lumière blanche FLB est appliqué à un ensemble séparateur-orienteur ESE qui délivre un groupe GP de deux faisceaux polarisés complémentaires, de lumière blanche, avec lesquels sont formés deux images de source IS1, IS2. Ces deux faisceaux correspondent aux deux faisceaux polarisés FP1, FP2′ montrés en figure 1.

Les deux faisceaux polarisés FP1, FP2′ de lumière blanche passent par un système dichroïque, un cube séparateur de couleurs CSC par exemple, dans lequel ils engendrent des faisceaux de mêmes caractéristiques géométriques mais de gamme spectrale étroite correspondant au rouge, au bleu et au vert.

La lumière verte est transmise par le cube séparateur de couleurs : la lumière verte est formée par deux faisceaux F1ᵥ et F2ᵥ semblables respectivement aux premier et second faisceaux polarisés FP1, FP2′ (figure 1). Ces deux faisceaux F1ᵥ et F2ᵥ sont transmis vers la lentille de champ LCh et l'écran matriciel d'un ensemble modulateur EMᵥ affecté au vert ; cet ensemble modulateur EMᵥ est disposé de manière que les deux faisceaux F1ᵥ et F2ᵥ (symbolisés par leur axe de propagation) se croisent sensiblement au niveau de la lentille de champ.

La composante de lumière relative au rouge est réfléchie par le cube séparateur de couleur CSC à 90° de la lumière verte. La lumière rouge est formée elle aussi de deux faisceaux F1ᵣ et F2ᵣ semblables respectivement aux premier et second faisceaux polarisés FP1, FP2′, mais dont le spectre correspond au rouge. Les deux faisceaux rouges F1ᵣ et F2ᵣ se propagent vers un dispositif modulateur affecté au rouge, et à cet effet ils passent par une lentille de champ LChᵣ qui permet de former des images de source intermédiaires pour le rouge IS1ᵣ, IS2ᵣ, après réflexion de ces faisceaux rouges par un miroir plan Mr1. Dans le plan de ces images source intermédiaires, IS1ᵣ et IS2ᵣ, une lentille relais LRᵣ assure une conjugaison optique entre la lentille de champ LChᵣ et la lentille de champ LCh contenue dans l'ensemble modulateur EMᵣ, auquel la lumière rouge parvient après une seconde réflexion dans un miroir plan Mᵣ₂.

La troisième composante spectrale, la lumière bleue est constituée également de deux faisceaux F1_{B} ET F2_{b}, qui se propage en direction d'un dispositif modulateur DM_{b} affecté au bleu. Le cheminement et le traitement de cette composante bleue se déduisent par symétrie : les deux faisceaux bleus F1_{b} et F2_{b} passent par une lentille de champ LCh_{b} pour le bleu, qui permet de former des images de sources intermédiaires IS1_{b} et IS2_{b} pour le bleu, après réflexion de ces deux faisceaux par un miroir plan Mb₁. Dans le plan de ces images source intermédiaires, une lentille relais LR_{b} assure une conjugaison optique entre la lentille de champ LCh_{b} et la lentille de champ LCₕ contenue dans l'ensemble modulateur EM_{b}, l'ensemble modulateur auquel la lumière bleue parvient après une seconde réflexion dans un miroir plan M_{b2}.

Les trois ensembles modulateurs EMᵥ, EMᵣ, EM_{b} sont disposés autour d'un système dichroïque CSC1, un cube par exemple semblable au cube CSC et qui permet de superposer ou recombiner les faisceaux modulés qui émergent des trois ensembles modulateurs, et d'orienter ces faisceaux de couleurs différentes en direction d'un objectif de projection LP commun.

Les ensembles de modulation EMᵣ, EM_{b} et EMᵥ, le cube dichroïque CSC1 et l'objectif de projection LP, sont disposés de manière que pour chaque ensemble modulateur, la lentille de champ LCh forme des images de source IS′1 et IS′2 (à la couleur à laquelle l'ensemble modulateur est affectée) dans le plan de l'objectif de projection LP ; ceci grâce à une réflexion sélective en longueur d'onde opérée dans le cube dichroïque CSC1.

Tous les faisceaux F1_{b} et F2_{b}, F1ᵣ et F2ᵣ, F1ᵥ et F2ᵥ ont une même direction de polarisation, et en conséquence on peut utiliser un unique analyseur A commun aux trois couleurs. Dans ce cas l'analyseur A est placé entre le cube dichroïque CSC1 et l'objectif de projection LP. Mais on peut aussi utiliser trois analyseurs séparés (non représentés) qui par exemple peuvent être constitués sous la forme de trois feuilles plastiques collées sur les trois faces d'entrée du cube dichroïque CSC1.

Cette disposition permet d'éclairer les trois écrans matriciels 5 avec des faisceaux de mêmes caractéristiques géométriques.

Les flux lumineux sont acheminés sans perte grâce aux lentilles de champ et aux lentilles relais. D'autre part, les étendues géométriques de faisceau sont conservées. Il est préférable que toutes les lentilles de champ LCₕ soient identiques entre elles ; et de préférence, que toutes les lentilles relais soient identiques entre elles.

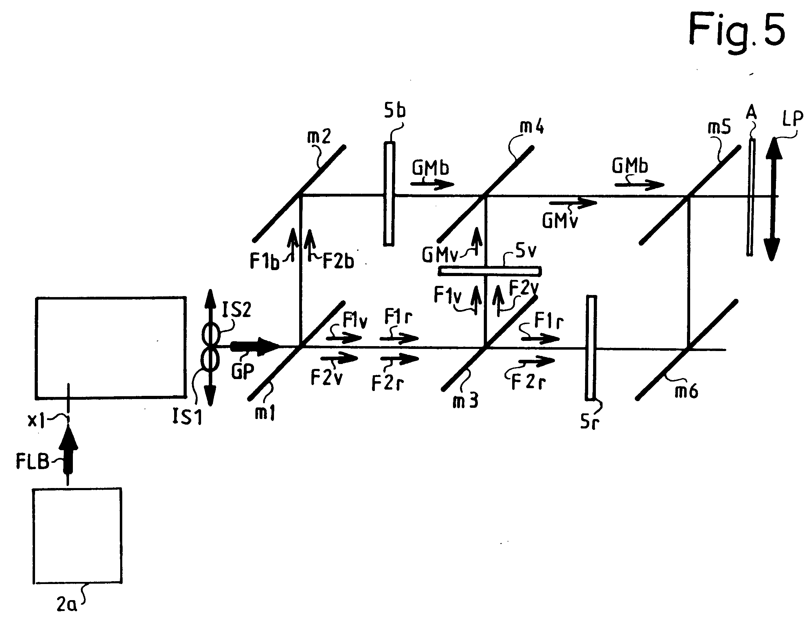

La figure 5 montre un projecteur couleur 25 conforme à l'invention, suivant une configuration dans laquelle les cubes dichroïques CSC et CSC1 de la figure 5 sont remplacés par des miroirs séparés.

Les images de source IS1, IS2 en lumière blanche, étant formée comme dans les exemples des figures 4 et 5, le groupe GP de deux faisceaux polarisés de lumière blanche se propage en direction d'un premier miroir sélectif en longueur d'onde m1 sensible uniquement à la lumière bleue. Ce miroir réfléchit la composante bleue F1_{b} et F2_{b}, et transmet les composantes vertes et rouges F1ᵥ et F2ᵥ, F1ᵣ et F2ᵣ ; ainsi la composante bleue se propage seule en direction d'un second miroir m2, et les composantes rouges et vertes se propagent en direction d'un troisième miroir sélectif m3. La composante bleue F1_{b}, F2_{b} est réfléchie par le second miroir m3 en direction d'un écran matriciel 5b affecté à la modulation du bleu ; le second miroir m2 n'est éclairé que par de la lumière monochromatique, verte dans l'exemple, il peut donc ne pas être sélectif. Sous l'action du troisième miroir m3 sensible uniquement au vert, la composante verte F1ᵥ, F2ᵥ est réfléchie vers un écran matriciel 5v affecté au vert ; alors que la composante rouge F1ᵣ, F2ᵣ est transmise par le troisième miroir m3 en direction d'un écran matriciel 5r, affecté au rouge. Ainsi les trois composantes sont amenées chacune à traverser l'écran matriciel 5r, 5b, 5v qui leur est affecté, et constituent chacune ensuite un groupe de faisceaux modulés, GMᵣ, GM_{b} et GMᵥ. Le groupe GM_{b} relatif au bleu traverse successivement, un quatrième miroir sélectif m4 sensible uniquement au vert, et un cinquième miroir sélectif m5 sensible uniquement au rouge, pour arriver ensuite à l'objectif de projection LP.

Le groupe GMᵥ relatif au vert, est réfléchi par le miroir sélectif m4, puis traverse le cinquième miroir sélectif m5 pour arriver à l'objectif de projection LP.

Enfin, le groupe GMᵣ relatif au rouge est réfléchi par un sixième miroir m6 sélectif ou non, puis réfléchi à nouveau par le miroir sélectif m5, en direction de l'objectif de projection LP.

Un analyseur peut être associé à chaque écran matriciel, ou bien comme montré à la figure 6, un unique analyseur A peut être interposé, par exemple entre le cinquième miroir sélectif m5 et l'objectif de projection LP.

Les lentilles de champs et les lentilles relais ne sont pas représentées sur la figure 6, mais la disposition de la figure 6 est compatible avec l'utilisation de telles lentilles.

L'avantage de cette disposition est notamment qu'elle permet d'avoir des distances égales entre les images de sources IS1, IS2 et les écrans matriciels 5ᵥ, 5ᵣ, 5_{b}, ainsi qu'entre ces écrans matriciels et l'objectif de projection LP.

Bien entendu on peut envisager toute permutation des couleurs.

## Revendications

1. Projecteur d'images comportant au moins une source de lumière (2, 2a), au moins un écran matriciel (5) à cristaux liquides, au moins un élément rotateur (RP) de direction de polarisation, au moins un séparateur de polarisation (CSP) séparant la lumière en deux faisceaux polarisés (FP1, FP2 et FP2′) ayant l'un par rapport à l'autre des directions de polarisation orthogonales, les deux faisceaux polarisés étant destinés à être modulés par l'écran matriciel après que l'un de ces faisceaux ait traversé l'élément rotateur (RP), caractérisé ce qu'il comporte, d'une part des premiers moyens (M1, M2, M3, M4) pour réaliser au moins deux réflexions pour chaque faisceau polarisé, une première réflexion réfléchissant le faisceau en direction d'un axe optique (xP) sur lequel est centré l'écran matriciel (5) et une seconde réflexion le réfléchissant en direction de l'écran matriciel (5), et en ce qu'il comporte d'autre part des seconds moyens (LC1, LC2) pour rendre convergent chaque faisceau polarisé sur au moins une partie de son trajet compris entre le séparateur de polarisation (SP) et l'écran matriciel (5), de manière que chaque faisceau polarisé forme une image (IS1, IS2) de la source de lumière entre la première réflexion et l'écran matriciel (5).

2. Projecteur d'images suivant la revendication 1, caractérisé en ce que le séparateur de polarisation (CSP) comporte une surface séparatrice de polarisation (SP) dont le plan, d'une part est perpendiculaire au plan de l'écran matriciel (5), et d'autre part contient ledit axe optique (xP).

3. Projecteur d'images suivant la revendication 2, caractérisé en ce que les premiers moyens pour réaliser les réflexions des deux faisceaux polarisés (FP1, FP2′) sont disposés symétriquement par rapport à l'axe optique (xP).

4. Projecteur d'images suivant l'une des revendications précédentes, caractérisé en ce que les premiers moyens de réflexions des deux faisceaux polarisés comportent, pour chaque faisceau polarisé (FP1, FP2, FP2′), un premier miroir (M1, M2) réfléchissant le faisceau en direction de l'axe optique (xP), et un second miroir (M3, M4) réfléchissant ensuite le faisceau en direction de l'écran matriciel (5).

5. Projecteur d'images suivant l'une des revendications précédentes caractérisé en ce que les seconds moyens pour rendre convergent chaque faisceau polarisé, comportent une première et une seconde lentilles convergentes (LC1, LC2).

6. Projecteur d'images suivant la revendication 5, caractérisé en ce que les première et seconde lentilles convergentes (LC1, LC2) sont disposées entre le séparateur de polarisation (SP) et les premiers miroirs (M1, M2).

7. Projecteur d'images suivant la revendication 4, caractérisé en ce que les premiers miroirs (M1, M2) sont des miroirs paraboliques afin de constituer en outre les seconds moyens pour rendre convergent chaque faisceau polarisé.

8. Projecteur d'images suivant l'une des revendications précédentes, caractérisé en ce que l'élément rotateur de polarisation (RP) est une cellule à cristaux liquide du type "nématique en hélice à 90°".

9. Projecteur d'images suivant la revendication 4, caractérisé en ce que les seconds miroirs (M3, M4) sont formés sur les faces d'un prisme (12).

10. Projecteur d'images suivant la revendication 4, caractérisé en ce qu'une lentille de champ (LCh) est disposée à proximité de l'écran matriciel (5), entre ce dernier et les seconds miroirs (M3, M4).

11. Projecteur d'images suivant la revendication 4, caractérisé en ce qu'une lentille dite "lentille relais" (LR) est disposée à proximité des seconds miroirs (M3, M4), entre ces derniers et l'écran matriciel.

12. Projecteur d'images suivant l'une des revendications précédentes, caractérisé en ce que, d'une part l'orientation en direction de l'écran matriciel (5) des deux faisceaux polarisés (FP1, FP2, FP2′), est accomplie dans un ensemble séparateur-orienteur (ESE) regroupant notamment le séparateur de polarisation (SP), l'élément rotateur de polarisation (RP), les premiers moyens pour assurer deux réflexions des faisceaux polarisés, et les seconds moyens pour rendre convergents les faisceaux polarisés, les deux faisceaux polarisés (FP1, FP2′) émergeant de l'ensemble séparateur-orienteur (ESE) constituant un groupe (GP) de faisceaux polarisés se propageant vers l'écran matriciel (5), d'autre part la modulation par l'écran matriciel (5) est accomplie dans un ensemble de modulation (EM), l'ensemble séparateur-orienteur (ESE) coopérant avec au moins un ensemble de modulation (EM).

13. Projecteur d'images suivant la revendication 12, caractérisé en ce qu'il comporte plusieurs dispositifs monochromes (DMᵣ, DM_{b}, DMᵥ) formés chacun par un ensemble séparateur-orienteur (ES) coopérant avec un ensemble modulateur (EM), chaque dispositif monochrome correspondant à une couleur différente.

14. Projecteur d'images suivant la revendication 13, caractérisé en ce que chaque dispositif monochrome (DMᵥ, DM_{b}, DMᵣ) coopère avec un objectif de projection différent.

15. Projecteur d'images suivant la revendication 12, caractérisé en ce qu'il comporte un ensemble séparateur-orienteur (ESE) coopérant avec plusieurs ensembles de modulation (EMᵥ, EM_{b}, EMᵣ) par l'intermédiaire d'un dispositif dichroïque de séparation de couleurs (CSC), chaque ensemble de modulation (EM1 à EM3) correspondant à une couleur différente.

16. Projecteur d'images suivant la revendication 15, caractérisé en ce que les différents ensembles de modulation (EM_{b}, EMᵣ, EMᵥ) coopèrent avec un même objectif de projection (LP), par l'intermédiaire d'un dispositif dichroïque (CSC1) de réunion.

17. Projecteur d'images suivant la revendication 15, caractérisé en ce que les différents ensembles de modulation (EM_{b}, EMᵣ, EMᵥ) coopèrent avec des objectifs de projection (LPᵣ, LPᵥ, LP_{b}) différents.

18. Projecteur d'images suivant la revendication 16, caractérisé en ce que les ensembles de modulation (EM_{b}, EMᵣ, EMᵣ) sont disposés autour du dispositif dichroïque (CSC1) de réunion, à une égale distance de ce dernier, et en ce qu'il comporte des troisièmes moyens (LChᵥ, LCh_{b}, LChᵥ) pour former des images de sources intermédiaires (IS1ᵣ, IS2ᵣ) entre au moins un des ensembles de modulation et le dispositif dichroïque (CSC) de séparation de couleurs.

19. Projecteur d'images suivant la revendication 12, caractérisé en ce qu'il comporte un ensemble séparateur-orienteur (ESE) coopérant avec au moins trois ensembles modulateurs (EM_{b}, EMᵣ, EMᵥ) et un unique objectif de projection (LP), à l'aide d'au moins six miroirs (m1 à m6) dont au moins quatre sont des miroirs sélectifs en longueurs d'ondes, chaque ensemble modulateur correspondant à une couleur différente.

## Patentansprüche

1. Bildprojektor mit mindestens einer Lichtquelle (2, 2a), mindestens einem matrixartig aufgebauten Flüssigkristallschirm (5), mindestens einem die Polarisationsrichtung drehenden Element (RP), mindestens einem Polarisationsseparator (CSP), der das Licht in zwei polarisierte Strahlen (FP1, FP2 und FP2′) aufteilt, die zueinander senkrecht stehende Polarisationsrichtungen besitzen, wobei die beiden polarisierten Strahlen von dem matrixförmig aufgebauten Schirm moduliert werden sollen, nachdem einer dieser Strahlen ein die Polarisation drehendes Element (RP) durchlaufen hat, dadurch gekennzeichnet, daß er einerseits erste Mittel (M1, M2, M3, M4) aufweist, die mindestens zwei Reflexionen für jeden polarisierten Strahl bewirken, von denen eine erste Reflexion den Strahl in Richtung auf eine optische Achse (xP) lenkt, auf die der matrixförmig aufgebaute Schirm (5) zentriert ist, während eine zweite Reflexion ihn dann in Richtung auf den matrixartig aufgebauten Schirm (5) lenkt, und daß er andererseits zweite Mittel (LC1, LC2) aufweist, um jeden polarisierten Strahl auf mindestens einem Teil seines Verlaufs zwischen dem Polarisationsseparator (CSP) und dem matrixförmig aufgebauten Schirm (5) konvergieren zu lassen, so daß jeder polarisierte Strahl ein Bild (IS1, IS2) der Lichtquelle zwischen der ersten Reflexion und dem matrixförmig aufgebauten Schirm (5) erzeugt.

2. Bildprojektor nach Anspruch 1, dadurch gekennzeichnet, daß der Polarisationsseparator (CSP) eine Polarisationstrennfläche (SP) aufweist, deren Ebene einerseits senkrecht zur Ebene des matrixförmig aufgebauten Schirms (5) verläuft und andererseits die optische Achse (xP) einschließt.

3. Bildprojektor nach Anspruch 2, dadurch gekennzeichnet, daß die ersten Mittel zur Erzeugung der Reflexionen der beiden polarisierten Strahlen (FP1, FP2′) symmetrisch bezüglich der optischen Achse (xP) angeordnet sind.

4. Bildprojektor nach einem der vorhergehenden Ansprüche, dadurch gekennzeichnet, daß die ersten Mittel zur Erzeugung der Reflexionen der beiden polarisierten Strahlen für jeden polarisierten Strahl (FP1, FP2, FP2′) einen ersten Spiegel (M1, M2), der den Stahl in Richtung auf die optische Achse (xP) ablenkt, und einen zweiten Spiegel (M3, M4) aufweisen, der dann den Strahl in Richtung auf den matrixförmig aufgebauten Schirm (5) lenkt.

5. Bildprojektor nach einem der vorhergehenden Ansprüche, dadurch gekennzeichnet, daß die zweiten Mittel, die jeden polarisierten Strahl konvergieren lassen, eine erste und eine zweite Sammellinse (LC1, LC2) enthalten.

6. Bildprojektor nach Anspruch 5, dadurch gekennzeichnet, daß die erste und die zweite Sammellinse (LC1, LC2) zwischen dem Polarisationsseparator (CSP) und den ersten Spiegeln (M1, M2) liegen.

7. Bildprojektor nach Anspruch 4, dadurch gekennzeichnet, daß die ersten Spiegel (M1, M2) parabolische Spiegel sind, um außerdem die zweiten Mittel zu bilden, die jeden polarisierten Strahl konvergieren lassen.

8. Bildprojektor nach einem der vorhergehenden Ansprüche, dadurch gekennzeichnet, daß das die Polarisation drehende Element (RP) eine Flüssigkristallzelle vom nematischen Typ mit 90°-Spirale ist.

9. Bildprojektor nach Anspruch 4, dadurch gekennzeichnet, daß die zweiten Spiegel (M3, M4) auf den Seiten eines Prismas (12) ausgebildet sind.

10. Bildprojektor nach Anspruch 4, dadurch gekennzeichnet, daß eine Feldlinse (LCh) in der Nähe des matrixartigen Schirms (5) zwischen diesem und den zweiten Spiegeln (M3, M4) angeordnet ist.

11. Bildprojektor nach Anspruch 4, dadurch gekennzeichnet, daß eine Relaislinse (LR) in der Nähe der zweiten Spiegel (M3, M4) zwischen diesen und dem matrixartig aufgebauten Schirm liegt.

12. Bildprojektor nach einem der vorhergehenden Ansprüche, dadurch gekennzeichnet, daß einerseits die Ausrichtung der beiden polarisierten Strahlen (FP1, FP2, FP2′) in Richtung auf den matrixförmig aufgebauten Schirm (5) in einer Trenn- und Richteinheit (ESE) erzielt wird, die insbesondere den Polarisationsseparator (CSP), das die Polarisation drehende Element (RP), die ersten Mittel, die zwei Reflexionen der polarisierten Strahlen bewirken, und die zweiten Mittel umfassen, die die polarisierten Strahlen konvergieren lassen, wobei die beiden polarisierten Strahlen (FP1, FP2′), die aus der Trennund Richteinheit (ESE) kommen, eine Gruppe (GP) von polarisierten Strahlen bilden, die sich zum matrixförmig aufgebauten Schirm (5) fortpflanzen, während die Modulation durch den matrixförmig aufgebauten Schirm (5) in einer Modulationseinheit (EM) erfolgt und die Trenn- und Richteinheit (ESE) mit mindestens einer Modulationseinheit (EM) zusammenwirkt.

13. Bildprojektor nach Anspruch 12, dadurch gekennzeichnet, daß er mehrere monochrome Vorrichtungen (DMᵣ, DM_{b}, DMᵥ) enthält, die je von einer Trenn- und Richteinheit (ESE) gebildet werden, die mit einer Modulatoreinheit (EM) zusammenwirkt, wobei jede monochrome Vorrichtung einer anderen Farbe entspricht.

14. Bildprojektor nach Anspruch 13, dadurch gekennzeichnet, daß jede monochrome Vorrichtung (DMᵥ, DM_{b}, DMᵣ) mit einem anderen Projektionsobjektiv zusammenwirkt.

15. Bildprojektor nach Anspruch 12, dadurch gekennzeichnet, daß er eine Trenn- und Richteinheit (ESE) aufweist, die mit mehreren Modulationseinheiten (EMᵥ, EM_{b}, EMᵣ) über eine dichroitische Farbtrennvorrichtung (CSC) zusammenwirkt, wobei jede Modulationseinheit einer anderen Farbe entspricht.

16. Bildprojektor nach Anspruch 15, dadurch gekennzeichnet, daß die verschiedenen Modulationseinheiten (EM_{b}, EMᵣ, EMᵥ) mit einem gemeinsamen Projektionsobjektiv (LP) über eine dichroitische Rekombinationsvorrichtung (CSC1) zusammenwirken.

17. Bildprojektor nach Anspruch 15, dadurch gekennzeichnet, daß die verschiedenen Modulationseinheiten (EM_{b}, EMᵣ, EMᵥ) mit jeweils eigenen Projektionsobjektiven (LPᵣ, LPᵥ, LP_{b}) zusammenwirken.

18. Bildprojektor nach Anspruch 16, dadurch gekennzeichnet, daß die Modulationseinheiten (EM_{b}, EMᵥ, EMᵣ) um eine dichroitische Rekombinationsvorrichtung (CSC1) in gleichem Abstand von dieser angeordnet sind, und daß der Projektor dritte Mittel (LChᵥ, LCh_{b}, LChᵣ) aufweist, um Bilder von Zwischenquellen (IS1ᵣ, IS2ᵣ) zwischen mindestens einer Modulationseinheit und der dichroitischen Farbtrennvorrichtung (CSC) zu bilden.

19. Bildprojektor nach Anspruch 12, dadurch gekennzeichnet, daß er eine Trenn- und Richteinheit (ESE) aufweist, die mit mindestens drei Modulatoreinheiten (EM_{b}, EMᵣ, EMᵥ) und einem gemeinsamen Projektionsobjektiv (LP) über mindestens sechs Spiegel (m1 bis m6) zusammenwirken, von denen mindestens vier wellenlängenselektive Spiegel sind und jede Modulatoreinheit einer anderen Farbe entspricht.

## Claims

1. Image projector including at least one light source (2, 2a), at least one liquid-crystal matrix screen (5), at least one polarization direction rotator element (RP), at least one polarization separator (CSP) separating the light into two polarized beams (FP1, FP2 and FP2′) having orthogonal polarization directions with respect to one another, the two polarized beams being intended to be modulated by the matrix screen after one of these beams has passed through the rotator element (RP), characterized in that it includes, on the one hand, first means (M1, M2, M3, M4) for performing at least two reflections for each polarized beam, a first reflection reflecting the beam towards an optical axis (xP) on which the matrix screen (5) is centred and a second reflection reflecting it towards the matrix screen (5), and in that it includes, on the other hand, second means (LC1, LC2) for making each polarized beam convergent over at least a part of its path lying between the polarization separator (SP) and the matrix screen (5), in such a way that each polarized beam forms an image (IS1, IS2) of the light source between the first reflection and the matrix screen (5).

2. Image projector according to Claim 1, characterized in that the polarization separator (CSP) includes a polarization separating surface (SP), the plane of which is, on the one hand, perpendicular to the plane of the matrix screen (5), and, on the other hand, contains the said optical axis (xP).

3. Image projector according to Claim 2, characterized in that the first means for performing the reflections of the two polarized beams (FP1, FP2′) are arranged symmetrically with respect to the optical axis (xP).

4. Image projector according to one of the preceding claims, characterized in that the first means of reflecting the two polarized beams include, for each polarized beam (FP1, FP2, FP2′), a first mirror (M1, M2) reflecting the beam towards the optical axis (xP), and a second mirror (M3, M4) then reflecting the beam towards the matrix screen (5).

5. Image projector according to one of the preceding claims, characterized in that the second means for making each polarized beam convergent include a first and a second converging lenses (LC1, LC2).

6. Image projector according to Claim 5, characterized in that the first and second converging lenses (LC1, LC2) are arranged between the polarization separator (SP) and the first mirrors (M1, M2).

7. Image projector according to Claim 4, characterized in that the first mirrors (M1, M2) are parabolic mirrors so as moreover to consititute the second means for making each polarized beam convergent.

8. Image projector according to one of the preceding claims, characterized in that the polarization rotator element (RP) is a liquid-crystal cell of the "90°-twisted nematic" type.

9. Image projector according to Claim 4, characterized in that the second mirrors (M3, M4) are formed on the faces of a prism (12).

10. Image projector according to Claim 4, characterized in that a field lens (LCh) is arranged in proximity to the matrix screen (5), between the latter and the second mirrors (M3, M4).

11. Image projector according to Claim 4, characterized in that a lens called "relay lens" (LR) is arranged in proximity to the second mirrors (M3, M4), between the latter and the matrix screen.

12. Image projector according to one of the preceding claims, characterized in that, on the one hand, the orientation towards the matrix screen (5) of the two polarized beams (FP1, FP2, FP2′), is accomplished in a separating-orienting assembly (ESE), grouping together particularly the polarization separator (SP), the polarization rotator element (RP), the first means for providing two reflections of the polarized beams, and the second means for making the polarized beams convergent, the two polarized beams (FP1, FP2′) emerging from the separating-orienting assembly (ESE) constituting one group (GP) of polarized beams propagating towards the matrix screen (5), on the other hand, modulation by the matrix screen (5) is accomplished in a modulation assembly (EM), the separating-orienting assembly (ESE) interacting with at least one modulation assembly (EM).

13. Image projector according to Claim 12, characterized in that it includes several monochrome devices (DMᵣ, DM_{b}, DMᵥ) each formed by a separating-orienting assembly (ES) interacting with a modulator assembly (EM), each monochrome device corresponding to a different colour.

14. Image projector according to Claim 13, characterized in that each monochrome device (DMᵥ, DM_{b}, DMᵣ) interacts with a different projection objective.

15. Image projector according to Claim 12, characterized in that it includes a separating-orienting assembly (ESE) interacting with several modulation assemblies (EMᵥ, EM_{b}, EMᵣ) via a dichroic colour-separating device (CSC), each modulation assembly (EM1 to EM3) corresponding to a different colour.

16. Image projector according to Claim 15, characterized in that the various modulation assemblies (EM_{b}, EMᵣ, EMᵥ) interact with the same projection objective (LP), via a dichroic combining device (CSC1).

17. Image projector according to Claim 15, characterized in that the various modulation assemblies (EM_{b}, EMᵣ, EMᵥ) interact with the different projection objectives (LPᵣ, LPᵥ, LP_{b}).

18. Image projector according to Claim 16, characterized in that the modulation assemblies (EM_{b}, EMᵣ, EMᵥ) are arranged around the dichroic combining device (CSC1), at an equal distance from the latter, and in that it includes third means (LChᵥ, LCh_{b}, LChᵥ) for forming intermediate source images (IS1ᵣ, IS2ᵣ) between at least one of the modulation assemblies and the dichroic colour-separating device (CSC).

19. Image projector according to Claim 12, characterized in that it includes a separating-orienting assembly (ESE) interacting with at least three modulator assemblies (EM_{b}, EMᵣ, EMᵥ) and a single projection objective (LP), by the use of at least six mirrors (m1 to m6) at least four of which are wavelength-selective mirrors, each modulator assembly corresponding to a different colour.
